# EUROPEAN PATENT APPLICATION

(11) **EP 2 552 050 A2**
(43) Date of publication of application: **30.01.2013**
(21) Application number: 12177985.4
(22) Date of filing: 26.07.2012
(51) Int. Cl.: H04L 12/00, H04L 29/14, H04L 29/12

(54) **Methods for handling multiple device management (dm) server addresses in a dm account management object (mo)**

(30) Priority: 27.07.2011 US 201161512005 P; 25.07.2012 US 201213557721
(71) Applicant: HTC Corporation, Taoyuan County 330 (TW)
(72) Inventor: Yu, Chun-Ta, 330 Taoyuan (TW); Tseng, Yin-Yeh, 330 Taoyuan (TW)
(74) Representative: Konkonen, Tomi-Matti Juhani

(57) **Abstract**

A method for handling multiple Device Management (DM) server addresses in a DM Account Management Object (MO) is provided. The method includes the steps of obtaining, by a DM client, a plurality of DM server addresses and a reference to one or more of the DM server addresses or an empty value from the DM Account MO, and building, by the DM client, a DM session according to the reference.

## Description

### CROSS REFERENCE TO RELATED APPLICATIONS

This Application claims priority of U.S. Provisional Application No. 61/512,005, filed on July 27, 2011, the entirety of which is incorporated by reference herein.

### BACKGROUND OF THE INVENTION

### Field of the Invention

The invention generally relates to processing of a Device Management (DM) Account Management Object (MO), and more particularly, to handling multiple server addresses in a DM Account MO.

### Description of the Related Art

The Open Mobile Alliance (OMA) was formed in June 2002 by nearly 200 companies representing the world's leading corporations in various fields of the mobile industry, including mobile operators, device and network suppliers, information technology companies, and content/service providers, with an aim to develop open standards for providing interoperable service enablers working across countries, operators, and mobile devices in the mobile phone industry. The OMA Device Management (DM) is the international de facto standard for electronic device (e.g., mobile phone, Personal Digital Assistant (PDA), or palm top computer) management. Device management may involve configuration of the device, such as enabling/disabling certain features of the device, changing the settings and parameters of the device, etc., software upgrades of the device, such as providing new software and/or bug fixes to be loaded onto the device, and fault control of the device, such as error reports from the device, queries about the status of the device, etc.

According to the Technical Specification (TS) for OMA DM standardized objects, a client implementing OMA DM (referred to herein as a DM client) must support the DM Account Management Object (MO). A DM Account MO contains the configuration settings for a Management Authority (MA), and in a DM Account MO, several DM server addresses associated with the MA may be provided for load sharing, privacy control, or other purposes, wherein each DM server address indicates to the DM client where the DM server is for the DM client to build a DM session with. However, the DM client can get confused about which DM server address it should use for building a DM session, and indeterminate behavior or even operation error may occur in the DM client. Also, all DM clients within DM Account MO may select the same DM server address among a plurality of DM server addresses for the same MA, and thus load sharing, privacy control, etc., may not function normally.

### BRIEF SUMMARY OF THE INVENTION

Thus, the invention proposes a DM server address selection mechanism for handling the DM Account MO, which enables the DM client to unambiguously select one DM server address from among a plurality of DM server addresses.

In a first aspect of the invention, a method for handling multiple DM server addresses in a DM Account MO is provided. The method comprises the steps of obtaining, by a DM client, a plurality of DM server addresses and a reference to one or more of the DM server addresses or an empty value from the DM Account MO, and building, by the DM client, a DM session according to the reference.

In a second aspect of the invention, an electronic device configured as a DM server is provided. The electronic device comprises first processor logic for initiating a bootstrap procedure for a DM client to create a DM Account MO comprising a plurality of DM server addresses and a reference to one or more of the DM server addresses or an empty value, so that the DM client builds a DM session according to the reference.

In a third aspect of the invention, an electronic device configured as a DM client is provided. The electronic device comprises first processor logic and second processor logic. The first processor logic is configured for obtaining a plurality of DM server addresses and a reference to one or more of the DM server addresses or an empty value from a DM Account MO. The second processor logic is configured for building a DM session according to the reference.

Other aspects and features of the present invention will become apparent to those with ordinarily skill in the art upon review of the following descriptions of specific embodiments of electronic devices and methods for handling multiple DM server addresses in a DM Account MO.

### BRIEF DESCRIPTION OF DRAWINGS

The invention can be more fully understood by reading the subsequent detailed description and examples with references made to the accompanying drawings, wherein:

Fig. 1 is a block diagram illustrating an architecture model for device management according to an embodiment of the invention;

Figs. 2A and 2B show a schematic diagram illustrating the tree structure of a DM Account MO according to an embodiment of the invention;

Fig. 3 is a message sequence chart illustrating the handling of multiple DM server addresses in a DM Account MO according to an embodiment of the invention;

Fig. 4 is a message sequence chart illustrating the handling of multiple DM server addresses in a DM Account MO according to another embodiment of the invention;

Fig. 5 is a message sequence chart illustrating the handling of multiple DM server addresses in a DM Account MO according to yet another embodiment of the invention; and

Fig. 6 is a flow chart illustrating the method for handling multiple DM server addresses in a DM Account MO according to an embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense.

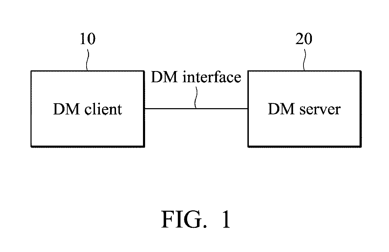

Fig. 1 is a block diagram illustrating an architecture model for device management according to an embodiment of the invention. In the architecture model, the DM client 10 and the DM server 20 are two logical entities which communicate with each other for device management via a DM interface specified by the DM protocol. Specifically, the DM client 10 may be implemented as a software component in an electronic device, such as a mobile phone, Personal Digital Assistant (PDA), or palm top computer, and configured and enabled by a general-purpose processor or a Micro-Control Unit (MCU) of the electronic device. Similarly, the DM server 20 may be implemented as a software component in an electronic device, such as a workstation or remote server, set up by operators, network suppliers, information technology companies, or content/service providers, and configured and enabled by a general-purpose processor or an MCU of the electronic device.

The Management Objects (MOs) specified by the DM protocol may be used to remotely manage the electronic device where the DM client 10 is configured, wherein the MOs contain structural information for configuration, software upgrades, and fault control of the DM client 10. Also, the MOs may be used to report information of the DM client 10 to the DM server 20 for assisting in device management. For example, an MO may contain information for enabling/disabling certain features of the electronic device where the DM client 10 is configured, or an MO may contain information for reporting errors in the electronic device where the DM client 10 is configured to the DM server 20 or for replying query results to the DM server 20.

Note that the general-purpose processors or MCUs of the electronic devices where the DM client 10 and DM server 20 are configured may each comprise processor logic for performing the described tasks for device management, and particularly for handling multiple DM server addresses in the DM Account MO as proposed in the invention. In addition to the general-purpose processors or MCUs, the electronic devices may each comprise at least a storage unit, e.g. a volatile memory such as a Random Access Memory (RAM), a non-volatile memory such as a flash memory, a hard disk, an optical disk, or any combination thereof, for storing the program code of the DM client 10 or the DM server 20, the created MO(s), and the information related to the process of device management. The electronic devices may also comprise other functional units, such as a display unit and/or keypad serving as the MMI (man-machine interface). If the electronic devices are capable of wireless communications, they may also each comprise a baseband unit for baseband signal processing, and a radio frequency (RF) unit for the transmission and reception of RF wireless signals.

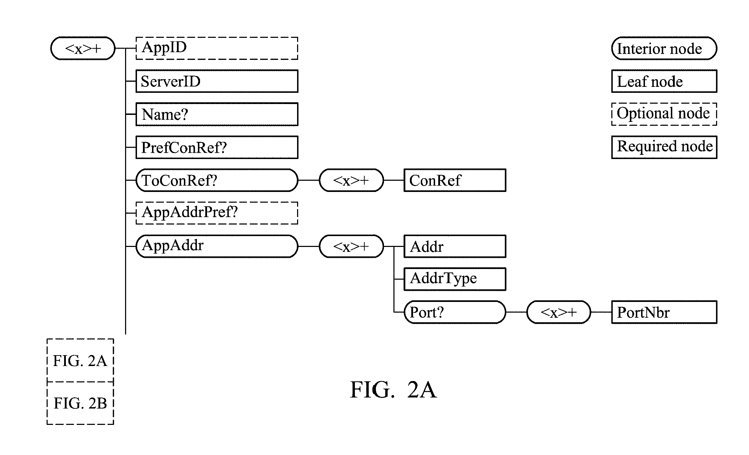

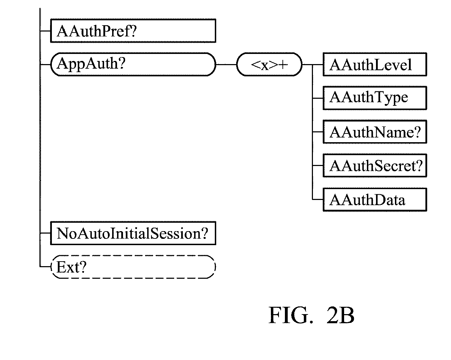

Figs. 2A and 2B show a schematic diagram illustrating the tree structure of a DM Account MO according to an embodiment of the invention. As shown in Fig. 2A, the DM Account MO is assembled to the DM tree under an unnamed interior node x, which is dynamically or statically created. In this embodiment, the unnamed interior node x is located at the root of the DM tree. In another embodiment, the unnamed interior node x may be located in a specific location other then the root of the DM tree. Particularly, the "./DMAcc/<x>/AppAddrPref" is an optional node specifying a reference to a preferred DM server address which is specified in the leaf node "./DMAcc/<x>/AppAddr/<x>/Addr". The "./DMAcc/<x>/AppAddr" is an interior node used to specify multiple DM server addresses. The "./DMAcc/<x>/AppAddr/<x>" is an interior node acting as a placeholder for separating one or more DM server addresses. The "./DMAcc/<x>/AppAddr/<x>/AddrType" is a leaf node specifying the type of a DM server address, such as "URI", "IPv4" or "IPv6". The "./DMAcc/<x>/AppAddr/<x>/Port" is an interior node specifying multiple port settings. The "./DMAcc/<x>/AppAddr/<x>/Port/<x>" is an interior node acting as a placeholder for aggregating one or more port settings. The "./DMAcc/<x>/AppAddr/<x>/Port/<x>/PortNbr" is a leaf node specifying a port number which is a decimal number that fits within the range of a 16-bit unsigned integer.

Note that, with the node "./DMAcc/<x>/AppAddrPref", the DM client may be able to unambiguously select one among the plurality of DM server addresses specified by the node "./DMAcc/<x>/AppAddr". Specifically, the node "./DMAcc/<x>/AppAddrPref" may specify a reference to one DM server address or a list of DM server addresses in a specific order. For example, the reference may be a Uniform Resource Identifier (URI) or a list of URIs of one of the node "./DMAcc/<x>/AppAddr/<x>/Addr", or may be a URI address or IP address or a list of URI/IP addresses each of which is equal to the DM server address specified by the one of the node "./DMAcc/<x>/AppAddr/<x>/Addr". Alternatively, the node "./DMAcc/<x>/AppAddrPref" may specify a reference to an empty value, meaning that the DM server address used for the previous DM session is preferred.

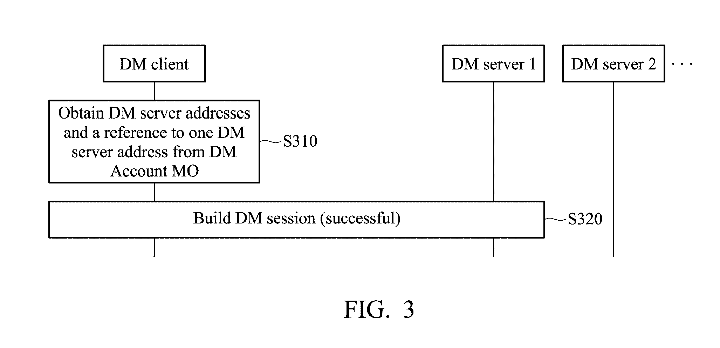

Fig. 3 is a message sequence chart illustrating the handling of multiple DM server addresses in a DM Account MO according to an embodiment of the invention. To begin, the DM client obtains a plurality of DM server addresses and a reference to one of the DM server addresses from a DM Account MO (step S310). In one embodiment, the DM Account MO may be created by the DM client during a bootstrap procedure initiated by a DM server. Detailed description of the bootstrap procedure is omitted here since it is beyond the scope of the invention, and reference may be made to the OMA Technical Specification. Next, when it is required to initiate a connection to a DM server, the DM client builds a DM session according to the reference (step S320), and the procedure ends for that the DM session is successfully built. In one embodiment, the building of the DM session may be triggered by an DM server, or by the user of the electronic device where the DM client is configured, or by the DM client itself for events such as timer expiring, a fault occurrence, and others. Specifically, the reference may be a URI (e.g., "./DMAcc/<x>/AppAddr/<x>/Addr") of a node in the DM Account MO for indicating one of the DM server addresses, or a URI address (e.g., "http://dm_server.org") or IP address (e.g., "192.168.0.11") corresponding to one of the DM server addresses, and the DM client builds the DM session with the DM server specified by the referenced DM server address (denoted as DM server 1). In another embodiment, if the building of the DM session is not successful, the DM client may build another DM session with the DM server specified by any one of the unreferenced DM server addresses (denoted as DM server 2) in the DM Account MO.

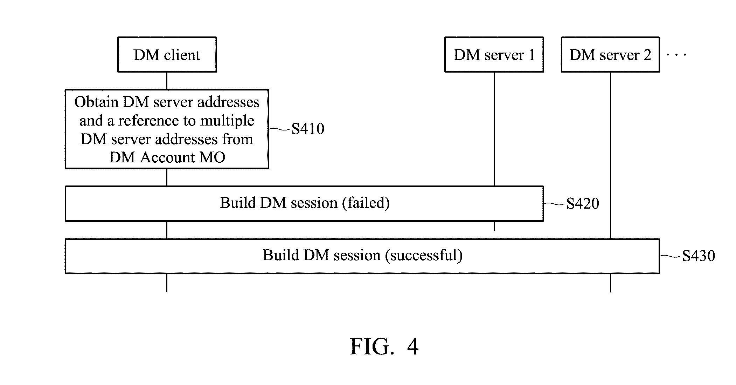

Fig. 4 is a message sequence chart illustrating the handling of multiple DM server addresses in a DM Account MO according to another embodiment of the invention. Similar to Fig. 3, the method begin with the DM client obtaining a plurality of DM server addresses and a reference to more than one of the DM server addresses from a DM Account MO (step S410), wherein the DM Account MO may be created by the DM client during a bootstrap procedure initiated by a DM server. Next, when it is required to initiate a connection to a DM server, the DM client builds a DM session according to the reference (step S420). Specifically, the reference may comprise a list of URIs of nodes in the DM Account MO for indicating the DM server addresses in a specific order, or a list of URI addresses or IP addresses corresponding to the DM server addresses in a specific order, and the DM client builds the DM session with the DM server specified by the first referenced DM server address in the specific order (denoted as DM server 1). Subsequently, due to the building of the DM session with the first DM server not being successful, the DM client builds another DM session with the DM server specified by the second referenced DM server address in the specific order (denoted as DM server 2) (step S430), and the procedure ends for that the DM session is successfully built. Note that the building of the DM session may be repeated with the DM server specified by the next referenced DM server address in the specific order, until a DM session is successfully built. For example, the reference may comprise 3 URI/IP addresses in the following order: "192.168.0.11", "192.168.0.22", and "http://dm_server.org". The DM client may first attempt to build a DM session with the DM server having the address "192.168.0.11", and if the building of the DM session fails, then attempt to build a DM session with the DM server having the address "192.168.0.22", and if the building of the DM session fails again, attempt to build a DM session with the DM server having the address "http://dm_server.org".

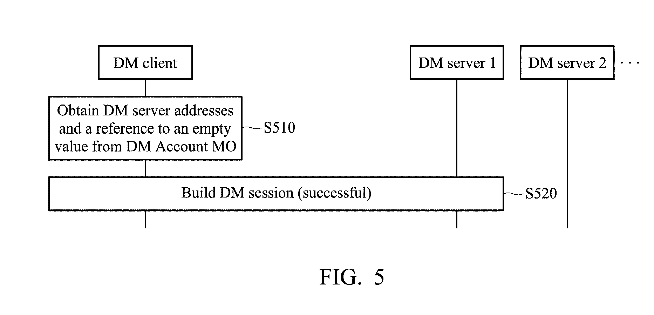

Fig. 5 is a message sequence chart illustrating the handling of multiple DM server addresses in a DM Account MO according to yet another embodiment of the invention. Similar to Fig. 3, the method begins with the DM client obtaining a plurality of DM server addresses and a reference to an empty value from a DM Account MO (step S510), wherein the DM Account MO may be created by the DM client during a bootstrap procedure initiated by a DM server. Next, when it is required to initiate a connection to a DM server, the DM client builds a DM session according to the reference (step S520). Specifically, the reference may be an empty-value character or another data structure having an empty value, and the DM client builds the DM session with the DM server specified by a DM server address used for the previous DM session (denoted as previous DM server). In another embodiment, if the building of the DM session is not successful, the DM client may build another DM session with the DM server specified by any one of the DM server addresses (denoted as DM server 1 and 2) in the DM Account MO.

It is to be understood that, in Figs. 3 to 5, each step may be performed by a respective processor logic in the electronic device where the DM client or the DM server is configured.

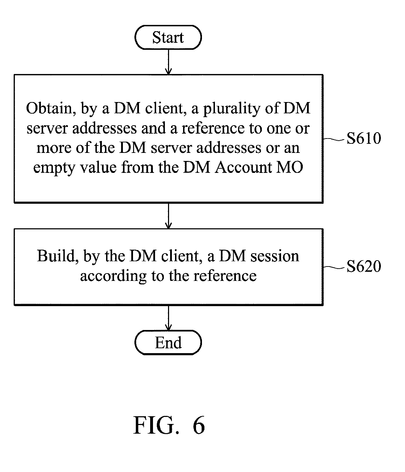

Fig. 6 is a flow chart illustrating the method for handling multiple DM server addresses in a DM Account MO according to an embodiment of the invention. To begin, a DM client obtains a plurality of DM server addresses and a reference to one or more of the DM server addresses or an empty value from a DM Account MO (step S610). Next, the DM client builds a DM session according to the reference (step S620). In one embodiment, the reference may be a URI of a node in the DM Account MO for indicating one of the DM server addresses, or a URI address or IP address corresponding to one of the DM server addresses, so that the DM session is built with the DM server specified by the referenced DM server address. In another embodiment, the reference may comprise a list of URIs of nodes in the DM Account MO for indicating the DM server addresses in a specific order, or a list of URI addresses or IP addresses corresponding to the DM server addresses, so that the DM client attempts to build a DM session with the DM servers specified by the DM server addresses, one by one in the specific order, until a DM session is successfully built. In yet another embodiment, the reference may be made to an empty value, so that the DM session is built with the DM server specified by the DM server address used for the previous DM session.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A method for handling multiple Device Management (DM) server addresses in a DM Account Management Object (MO), comprising:
obtaining, by a DM client, a plurality of DM server addresses and a reference to one or more of the DM server addresses or an empty value from the DM Account MO; and
building, by the DM client, a DM session according to the reference.

2. The method of claim 1, wherein the reference is a Uniform Resource Identifier (URI) of a node in the DM Account MO for indicating one of the DM server addresses, or
wherein the reference is a URI address or IP address corresponding to one of the DM server addresses.

3. The method of claim 1, wherein the reference comprises a list of URIs of nodes in the DM Account MO for indicating the DM server addresses in a specific order, and the building of the DM session is performed according to the specific order.

4. The method of claim 1, wherein the reference comprises a list of URI addresses or IP addresses corresponding to the DM server addresses in a specific order, and the building of the DM session is performed according to the specific order.

5. The method of claim 1, further comprising building, by the DM client, another DM session according to one of the unreferenced DM server addresses in the DM Account MO, in response to the building of the DM session according to the reference being failed.

6. The method of claim 1, wherein the DM session is built with another DM server address used for a previous DM session, in response to the reference being made to the empty value.

7. An electronic device, configured as a Device Management (DM) server, comprising:
first processor logic, initiating a bootstrap procedure for a DM client to create a DM Account Management Object (MO) comprising a plurality of DM server addresses and a reference to one or more of the DM server addresses or an empty value,
so that the DM client builds a DM session according to the reference.

8. The electronic device of claim 7, wherein the reference is a Uniform Resource Identifier (URI) of a node in the DM Account MO for indicating one of the DM server addresses, or the reference is a URI address or IP address corresponding to one of the DM server addresses.

9. An electronic device, configured as a Device Management (DM) client, comprising:
first processor logic, obtaining a plurality of DM server addresses and a reference to one or more of the DM server addresses or an empty value from a DM Account Management Object (MO); and
second processor logic, building a DM session according to the reference.

10. The electronic device of claim 9, wherein the reference is a Uniform Resource Identifier (URI) of a node in the DM Account MO for indicating one of the DM server addresses, or the reference is a URI address or IP address corresponding to one of the DM server addresses.

11. The electronic device of claim 9, wherein the reference comprises a list of URIs of nodes in the DM Account MO for indicating the DM server addresses in a specific order, and the building of the DM session is performed according to the specific order.

12. The electronic device of claim 9, wherein the reference comprises a list of URI addresses or IP addresses corresponding to the DM server addresses in a specific order, and the building of the DM session is performed according to the specific order.

13. The electronic device of claim 9, further comprising third processor logic for building another DM session according to one of the unreferenced DM server addresses in the DM Account MO, in response to the building of the DM session according to the reference being failed.

14. The electronic device of claim 9, wherein the DM session is built with another DM server address used for a previous DM session, in response to the reference being made to the empty value.

15. A computer program product, comprising computer program code means configured to perform the steps of any preceding claims 1-6 when executed.
